(19) European Patent Office — Europäisches Patentamt / European Patent Office / Office européen des brevets

(11) **EP 2 988 463 B1**

(12) **EUROPEAN PATENT SPECIFICATION**

(45) Date of publication and mention
of the grant of the patent:
**22.05.2019 Bulletin 2019/21**

(51) Int Cl.:
***H04L 27/26*** *(2006.01)*

(21) Application number: **15179631.5**

(22) Date of filing: **04.08.2015**

(54) **ENSURING THE PERFORMANCE OF NORMAL PERFORMANCE CARRIERS**

SICHERSTELLUNG DER LEISTUNG VON NORMALLEISTUNGSTRÄGERN

ASSURANCE DE LA PERFORMANCE DE SUPPORTS DE PERFORMANCE NORMALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2014 US 201462038762 P**

(43) Date of publication of application:
**24.02.2016 Bulletin 2016/08**

(73) Proprietor: **Nokia Technologies Oy**
**02610 Espoo (FI)**

(72) Inventors:
• **DALSGAARD, Lars**
**90230 Oulu (FI)**
• **KAIKKONEN, Jorma**
**90800 Oulu (FI)**

(74) Representative: **Ruuskanen, Juha-Pekka et al**
**Page White & Farrer**
**Bedford House**
**John Street**
**London WC1N 2BF (GB)**

(56) References cited:
• BROADCOM CORPORATION: "Discussion on the open issues of increased number of carriers for UE monitoring", 3GPP DRAFT; R4-71AH-0052 DISCUSSION ON THE OPEN ISSUES OF INCREASED NUMBER OF CARRIERS FOR UE MONITORING, 3RD GENERATION PARTNERSHIP PROJECT (3GPP), MOBILE COMPETENCE CENTRE ; 650, ROUTE DES LUCIOLES , vol. RAN WG4, no. Beijing; 20140624 - 20140626 18 June 2014 (2014-06-18), XP050868954, Retrieved from the Internet: URL:http://www.3gpp.org/ftp/tsg_ran/WG4_Radio/TSGR4_AHs/TSGR4_AH_Rel-12-RRM_June 2014 /Docs/ [retrieved on 2014-06-18]
• ERICSSON: "RRM requirements for increased carrier monitoring in E-UTRA Connected state", 3GPP DRAFT; R4-141871 INCMON_EUTRA_CONNECTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. San Jose del Cabo, Mexico; 20140331 - 20140404 31 March 2014 (2014-03-31), XP050796963, Retrieved from the Internet: URL:http://www.3gpp.org/ftp/Meetings_3GPP_SYNC/RAN4/Docs/ [retrieved on 2014-03-31]

**EP 2 988 463 B1**

## Description

### Field

The subject matter described herein relates to wireless including multicarrier operation.

### Background

User equipment (UE), such as a cell phone, a smart phone, and/or the like, may be configured to operate in networks where the UE may need to monitor multiple frequency carriers for use. For example, a UE may monitor multiple carriers transmitted by one or more base stations or wireless access points by detecting the presence of the carriers, measuring the carriers, and/or reporting the presence/measurement of the carrier to the network. The UE may then access one or more of the carriers in order to establish one or more connections to the base station(s).

The document BROADCOM CORPORATION: "Discussion on the open issues of increased number of carriers for UE monitoring",3GPP DRAFT; R4-71AH-0052 discloses that carriers are split into normal performance group and reduced performance group, which are intended to be monitored with different performance. The actual performance within a group depends on the number of carriers in that group. In order to avoid a reduced performance group having equal or better monitoring performance than a normal performance group, a scaling factor to set the difference in performance depends on the number of carriers in each group.

### Summary

The invention is as defined in the independent claims.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of the Drawings

In the drawings,

FIG. 1 depicts a signaling diagram, in accordance with some example embodiments;
FIG. 2 depicts a plot showing the effects of multiple carriers, in accordance with some example embodiments; and
FIG. 3 depicts an example of a radio, in accordance with some example embodiments.

Like labels are used to refer to same or similar items in the drawings.

### Detailed Description

A user equipment (UE) may need to be able to monitor an increasing quantity of carriers while in idle mode, connected mode, or a combination of both. To that end, minimum UE requirements related to the quantity of carriers the UE may be configured with or be able to monitor may be increased. For example, mobile networks may increase the quantity of carriers that a UE should monitor from 3 inter-frequency E-UTRAN (Evolved UMTS Terrestrial Radio Access Network) carriers to 8 or more inter-frequency FDD (frequency division duplexing) E-UTRAN carriers using the same or different radio access carriers. Scaling monitoring requirements in a linear manner according to a corresponding increase in the carriers being monitored may not be feasible in some systems implementations given that associated monitoring delays (e.g., due to cell detection delay, measurement delay, and/or the like) may be unacceptably long and may impact system performance in terms of mobility and lost connections. As a consequence, the UE may handle some carriers as normal performance carriers and handle other carriers as reduced performance carriers. In the case of reduced performance carriers, these carriers may have detection and monitoring performance requirements scaled to enable relaxed monitoring requirements, when compared to the normal performance carriers. The UE may thus monitor the reduced performance carriers in a relaxed manner that allows for longer delays for cell detection and measurement, when compared to the normal performance carriers.

To enable use of the normal and reduced performance carriers, the UE may be configured with one or more configuration parameters. The parameters may include a scaling parameter, potentially a quantity of carriers in the normal performance group, and/or a quantity of carriers in the reduced performance group. Although the reduced performance carriers should have reduced performance when compared to the normal carriers, the settings of the parameters may, under certain circumstances, lead to the reduced performance carriers having better monitoring performance (for example, lower cell detection delay, better measurement accuracy, lower measurement delay, and/or the like) than normal performance carriers.

In some example embodiments, a rule may be provided at a UE. The rule may be used in the UE in order to ensure that the performance of the carriers in the reduced performance carrier group will not be better than the performance of carriers in the normal performance group. To illustrate, if the UE determines that the configuration parameters (for example, scaling factor, quantity of normal performance group carriers (Nn), and quantity of reduced performance group carriers (Nr)) for the UE may result in the reduced performance carrier(s) having better performance than the normal performance carriers, the UE may fallback to another mode of operations and scale according to performance requirements for the other mode. For example, the other mode may be an existing/legacy mode in which case the UE may scale according to existing rules (for example, a linear scaling) for the UE, and/or the other mode may be a default mode having a default set of settings for scaling and carrier grouping.

Although some of the examples described herein refer to two groups, the normal and reduced performance group, additional groupings of carriers may be used as well. When this is the case, the performance monitoring rule at the UE (which ensures the performance of the groups as noted above) may also take into account these additional groups and whether the groups should be monitored using the received parameters or monitored using some other mode. Moreover, the rule at the user equipment may be specified by a standard, provided by the network, or a combination of both. For example, the network may signal the UE when it should apply the monitoring performance rule.

In some example embodiments, the UE may signal the network when the carrier monitoring configuration parameters may result in the reduced performance carrier(s) having better performance than the normal performance carrier(s). This signaling may also indicate to the network that the UE may fallback to another mode of operation, such as legacy or default monitoring settings.

In some example embodiments, the rule may be used in the UE in order to ensure that the performance of the carriers in the reduced performance carrier group will not be equal or better than the performance of carriers in the normal performance group. To illustrate if the UE determines that the configuration parameters (for example, scaling factor, quantity of normal performance group carriers (Nn), and quantity of reduced performance group carriers (Nr)) for the UE may result in the reduced performance carrier(s) having equal or better performance than the normal performance carriers, the UE may fallback to another mode of operations and scale according to performance requirements for the other mode.

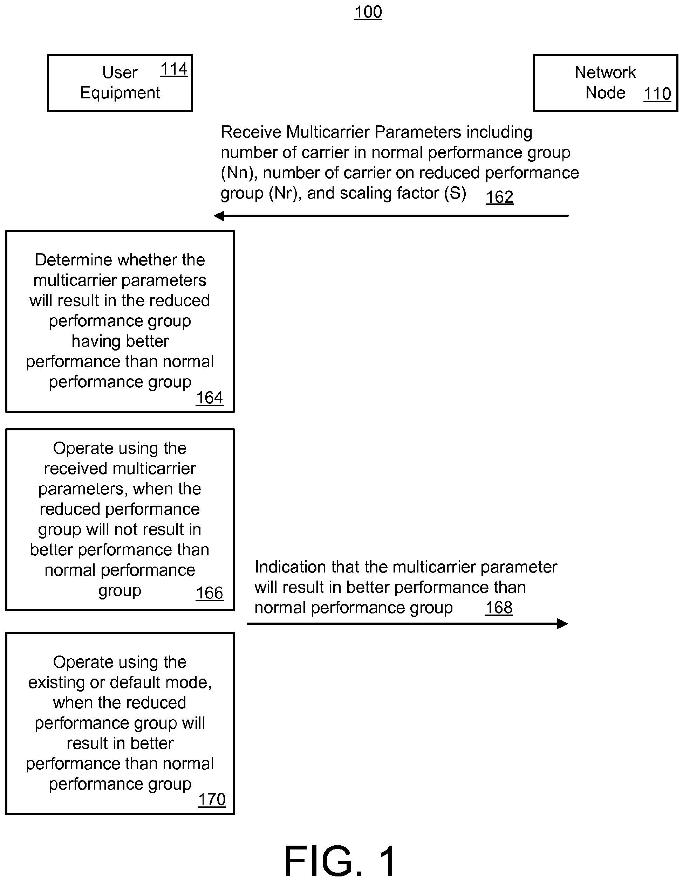

FIG. 1 depicts a signaling diagram 100 including a UE 114, such as a cell phone, smartphone, and/or any other wireless device, and a network node 110, such as a base station, wireless access point, and/or the like.

In some example embodiments, the network node 110 may send, at 162, to the UE 114 the multicarrier configuration parameters. The configuration parameters may include a quantity of carriers in normal performance group (Nn), a quantity of carrier on reduced performance group (Nr), and/or a scaling factor (S). The configuration parameters may be carried by a radio resource control message, such as an RRC Connection Reconfiguration message, although other types of messages may be used as well. In this context, multicarrier refers to the need for a UE to monitor multiple carriers including an increased quantity of carriers on UE side.

The scaling factor, S, may be used to scale the UE's settings associated with monitoring the normal performance carriers and/or the reduced performance carriers. For example, the UE may scale the normal performance requirements according to a function, such as S/(S-1), although other functions may be used as well. Moreover, the UE may scale the reduced performance requirements by the scaling factor, S. To illustrate, the UE may scale the cell detection and measurement requirements (for example, time delay, $T_{Identify\_Inter}$, $T_{Measurement\_Period\_Inter\_FDD}$, and/or the like) by S for one or more carriers in the reduced performance group, and scale the cell detection and measurement requirements by S/(S-1) for one or more carriers in the normal performance group.

In some example embodiments, the UE may, at 164, determine whether the multicarrier parameters will result in the reduced performance group having better performance than normal performance group. Depending on the number of carriers in each of the reduced and normal performance groups and the chosen scaling factor S, the performance of the reduced performance carriers can end up being better than the performance of the normal performance carriers. Although some of the examples described herein refer to the UE determining whether the multicarrier parameters will result in the reduced performance group having better performance than normal performance, this determination may take place at other nodes including network nodes, such as a base station and the like.

Moreover, although process 100 describes the rule at the UE inhibiting use of the received parameters 162 if the multicarrier monitoring performance of the reduced performance carrier group is better than the normal group, the rule may also inhibit use of the received parameters 162 if the multicarrier monitoring performance of the reduced performance carrier group is equal to or better the normal group. Furthermore, the rule may also take into account other groups of carriers and other hierarchies/monitoring priorities of these other groups.

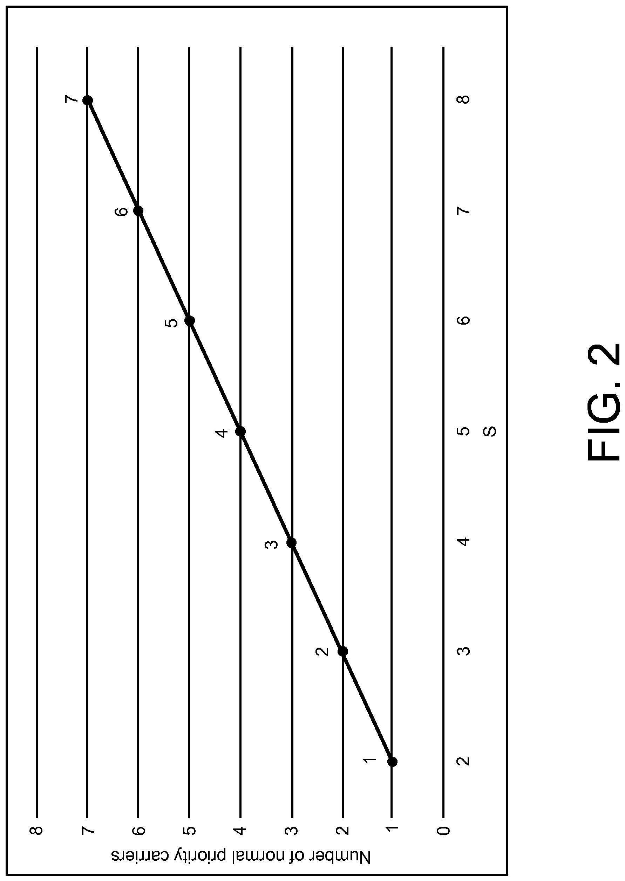

FIG. 2 depicts an example plot of a crossover point for normal and reduced performance requirements as a function of scaling factor, S, assuming Nr=1. It can be seen at FIG. 2 that so long as the scaling factor, S, is larger than the number of carriers in normal performance group (s≥Nn+1), the reduced requirements are not more stringent than normal requirements. To generalize and cover different cases with varying number of reduced carriers, this can also be derived by the following equation:

$$ s \geq \frac{N_n}{N_r} + 1. $$

When the UE determines that the multicarrier configuration parameters will not result in the reduced performance group having better performance than normal performance group, the UE may operate, at 166, using the parameters received at 162. For example, the UE may scale the cell detection and measurement requirements by S for one or more carriers in the reduced performance group, and scale the cell detection and measurement requirements by S/(S-1) for one or more carriers in the normal performance group.

In some example embodiments, when the UE determines that the multicarrier parameters will result in the reduced performance group having better performance than normal performance group, the UE may signal, at 168, the network, to indicate that the received parameters may result in better performance for the reduced performance group than the normal performance carrier group. This signaling may provide the network with information that the multicarrier configuration parameters cause a performance condition at the UE. The network may respond to the signaling by reconfiguring the UE with different measurement configuration covering the Nn, Nr or S or any combination thereof.

When the UE determines that the multicarrier parameters will result in the reduced performance group having better performance than normal performance group, the UE may fallback, at 170, to another operating mode in accordance with some example embodiments. For example, the UE may fallback to another scaling (for example, a linear scaling or a default scaling) of the performance requirements for all the configured carriers or some limited number of carriers. To illustrate, if the UE is configured with 3 normal performance carriers and 4 reduced performance carriers, the performance for each configured carrier will be 7 times the performance requirements of a single carrier. Alternatively or additionally, the UE may fallback to a default set of settings for scaling and carrier grouping. The default may be applicable to all of the configurable parameters (Nn, Nr and S), although the default may be applicable to some of the parameters as well (e.g., Nn and Nr while keeping configured S).

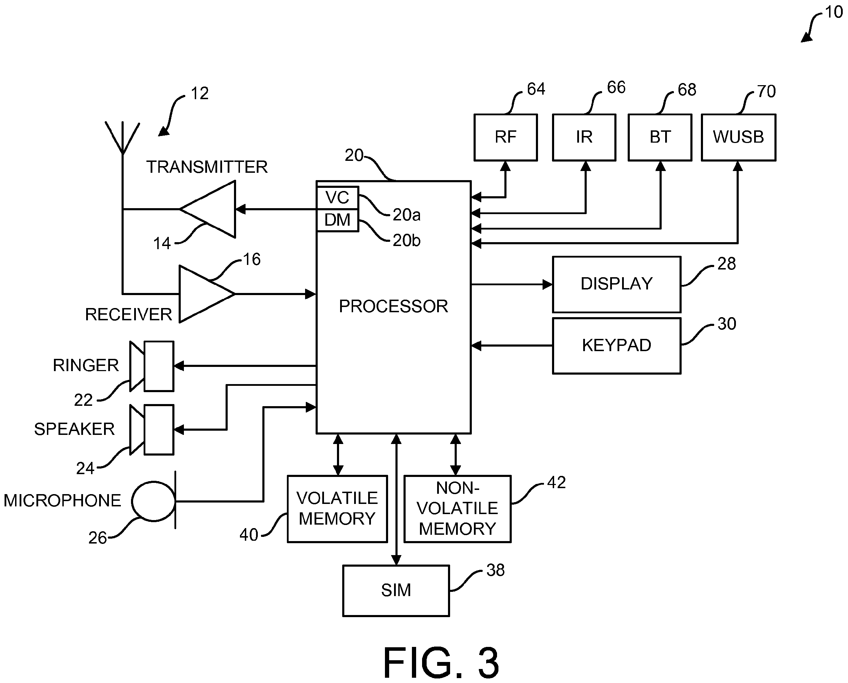

FIG. 3 illustrates a block diagram of an apparatus 10, in accordance with some example embodiments. Apparatus 10 may comprise a wireless device, such as user equipment 114, a wireless access point, and/or base station 110.

The apparatus 10 may, in some example embodiments, include at least one antenna 12 in communication with a transmitter 14 and a receiver 16. Alternatively transmit and receive antennas may be separate.

The apparatus 10 may, in some example embodiments, also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 10 as a single processor, in some example embodiments the processor 20 may comprise a plurality of processors or processing cores.

Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, and/or the like. In addition, these signals may include speech data, user generated data, user requested data, and/or the like.

The apparatus 10 may be capable of operating with one or more air interface standards, communication protocols, modulation types, access types, and/or the like. For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 3, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth™ (BT) transceiver 68 operating using Bluetooth™ wireless technology, a wireless universal serial bus (USB) transceiver 70, a Bluetooth™ Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), a eUICC, an UICC, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus to perform one or more of the operations disclosed herein with respect to the UE and/or base station (for example, sending and/or receiving the parameters, signaling the network if the parameters may result in the reduced carriers having better performance than the normal carriers, and/or the like as disclosed herein including process 100). The memories may comprise an identifier, such as an international mobile equipment identification (IMEI) code, capable of uniquely identifying apparatus 10. The functions may include one or more of the operations disclosed with respect to the UE and/or base station. The memories may comprise an identifier, such as an international mobile equipment identification (IMEI) code, capable of uniquely identifying apparatus 10. In the example embodiment, the processor 20 may be configured using computer code stored at memory 40 and/or 42 to perform one or more of the operations disclosed herein with respect to the UE and/or base station.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 3, computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein is consistent mobility operation of a UE using multiple carriers.

If desired, the different functions discussed herein may be performed in a different order and/or concurrently with each other. Furthermore, if desired, one or more of the above-described functions may be optional or may be combined.

The term "based on" includes "based on at least." The use of the phase "such as" means "such as for example" unless otherwise indicated.

**Claims**

1. An method comprising:

     receiving, at a user equipment, a plurality of multicarrier parameters including a scaling parameter, a first quantity of carriers in a first group of carriers, and a second quantity of carriers in a second group of carriers, wherein the scaling parameter is for scaling of monitoring performance settings of the first and second groups of carriers;
     operating in a first mode using the received scaling factor, when the received plurality of multicarrier parameters does not result in the second group having equal or better monitoring performance than the first group; and
     operating in a second mode when the received plurality of multicarrier parameters results in the second group having equal or better monitoring performance than the first group wherein the second mode includes a default scaling of monitoring performance settings of the first and second groups of carriers.

2. The method of claim 1, wherein the second group comprises one or more carriers to be monitored with monitoring performance that is less than the first group.

3. The method of claims 1-2 further comprising: determining whether the received plurality of multicarrier parameters result in the second group having equal or better monitoring performance than the first group.

4. The method of claims 1-3, wherein the second mode comprises a linear scaling of monitoring performance settings of the first and second groups of carriers.

5. The method of claims 1-4, wherein the first mode comprises scaling of monitoring performance settings of the first and second groups in accordance with the received scaling factor.

6. The method of claims 1-5, wherein the monitoring performance settings includes at least one of a first time for detecting a carrier or a second time for measuring the carrier.

7. An apparatus comprising:

     means for receiving a plurality of multicarrier parameters including a scaling parameter, a first quantity of carriers in a first group of carriers, and a second quantity of carriers in a second group of carriers, wherein the scaling parameter is for scaling of monitoring performance settings of the first and second groups of carriers;
     means for operating in a first mode using the received scaling factor, when the received plurality of multicarrier parameters does not result in the second group having equal or better monitoring performance than the first group; and
     means for operating in a second mode when the received plurality of multicarrier parameters results in the second group having equal or better monitoring performance than the first group wherein the second mode includes a default scaling of monitoring performance settings of the first and second groups of carriers.

8. The apparatus of claim 7, wherein the second group comprises one or more carriers to be monitored with monitoring performance that is less than the first group.

**9.** The apparatus of claims 7-8 further comprising: means for determining whether the received plurality of multicarrier parameters result in the second group having equal or better monitoring performance than the first group.

**10.** The apparatus of claims 7-9, wherein the second mode comprises a linear scaling of monitoring performance settings of the first and second groups of carriers.

**11.** The apparatus of claims 7-10, wherein the first mode comprises scaling of monitoring performance settings of the first and second groups in accordance with the received scaling factor.

**12.** The apparatus of claims 7-11, wherein the monitoring performance settings includes at least one of a first time for detecting a carrier or a second time for measuring the carrier.

**13.** A computer program comprising instructions to configure a processor to cause a method according to at least one of claims 1-6 to be performed.

**Patentansprüche**

**1.** Verfahren, aufweisend:

Empfangen, an einem Endgerät, mehrerer Mehrfachträgerparameter, einschließlich eines Skalierungsparameters, einer ersten Menge von Trägern in einer ersten Gruppe von Trägern und einer zweiten Menge von Trägern in einer zweiten Gruppe von Trägern, wobei der Skalierungsparameter zum Skalieren von Leistungsüberwachungseinstellungen der ersten und zweiten Gruppe von Trägern dient;
Betreiben in einem ersten Modus unter Verwendung des empfangenen Skalierungsfaktors, wenn die empfangenen mehreren Mehrfachträgerparameter nicht dazu führen, dass die zweite Gruppe eine gleiche oder bessere Überwachungsleistung als die erste Gruppe hat; und
Betreiben in einem zweiten Modus, wenn die empfangenen mehreren Mehrfachträgerparameter dazu führen, dass die zweite Gruppe eine gleiche oder bessere Überwachungsleistung als die erste Gruppe hat, wobei der zweite Modus eine Standardskalierung der Leistungsüberwachungseinstellungen der ersten und zweiten Gruppe von Trägern enthält.

**2.** Verfahren nach Anspruch 1, wobei die zweite Gruppe einen oder mehrere Träger aufweist, die mit einer Überwachungsleistung überwacht werden sollen, die kleiner ist als die der ersten Gruppe.

**3.** Verfahren nach einem der Ansprüche 1-2, ferner aufweisend:
Bestimmen, ob die empfangenen mehreren Mehrfachträger-Parameter dazu führen, dass die zweite Gruppe eine gleiche oder bessere Überwachungsleistung als die erste Gruppe hat.

**4.** Verfahren nach den Ansprüchen 1-3, wobei der zweite Modus eine lineare Skalierung von Überwachungsleistungseinstellungen der ersten und der zweiten Gruppe von Trägern aufweist.

**5.** Verfahren nach den Ansprüchen 1-4, wobei der erste Modus das Skalieren von Überwachungsleistungseinstellungen der ersten und der zweiten Gruppe in Übereinstimmung mit dem empfangenen Skalierungsfaktor aufweist.

**6.** Verfahren nach den Ansprüchen 1-5, wobei die Überwachungsleistungseinstellungen eine erste Zeit zum Erfassen eines Trägers und/oder eine zweite Zeit zum Messen des Trägers aufweisen.

**7.** Vorrichtung, aufweisend:

Einrichtungen zum Empfangen mehrerer Mehrfachträgerparameter, einschließlich eines Skalierungsparameters, einer ersten Menge von Trägern in einer ersten Gruppe von Trägern und einer zweiten Menge von Trägern in einer zweiten Gruppe von Trägern, wobei der Skalierungsparameter zum Skalieren von Leistungsüberwachungseinstellungen der ersten und zweiten Gruppe von Trägern dient;
Einrichtungen zum Betreiben in einem ersten Modus unter Verwendung des empfangenen Skalierungsfaktors, wenn die empfangenen mehreren Mehrfachträgerparameter nicht dazu führen, dass die zweite Gruppe eine gleiche oder bessere Überwachungsleistung als die erste Gruppe hat; und
Einrichtungen zum Betreiben in einem zweiten Modus, wenn die empfangenen mehreren Mehrfachträgerparameter dazu führen, dass die zweite Gruppe eine gleiche oder bessere Überwachungsleistung als die erste Gruppe hat, wobei der zweite Modus eine Standardskalierung der Leistungsüberwachungseinstellungen der ersten und zweiten Gruppe von Trägern enthält.

**8.** Vorrichtung nach Anspruch 7, wobei die zweite Gruppe einen oder mehrere Träger aufweist, die mit einer Überwachungsleistung überwacht werden sollen, die kleiner ist als die der ersten Gruppe.

**9.** Vorrichtung nach den Ansprüchen 7-8, ferner aufweisend:
Einrichtungen zum Bestimmen, ob die empfangenen mehreren Mehrfachträger-Parameter dazu führen, dass die zweite Gruppe eine gleiche oder bessere Überwachungsleistung als die erste Gruppe hat.

**10.** Vorrichtung nach den Ansprüchen 7-9, wobei der zweite Modus eine lineare Skalierung von Überwachungsleistungseinstellungen der ersten und der zweiten Gruppe von Trägern aufweist.

**11.** Vorrichtung nach den Ansprüchen 7-10, wobei der erste Modus das Skalieren von Überwachungsleistungseinstellungen der ersten und der zweiten Gruppe in Übereinstimmung mit dem empfangenen Skalierungsfaktor aufweist.

**12.** Vorrichtung nach den Ansprüchen 7-11, wobei die Überwachungsleistungseinstellungen eine erste Zeit zum Erfassen eines Trägers und/oder eine zweite Zeit zum Messen des Trägers aufweisen.

**13.** Computerprogramm, aufweisend Anweisungen zum Konfigurieren eines Prozessors, um die Durchführung eines Verfahrens nach mindestens einem der Ansprüche 1 bis 6 zu veranlassen.

**Revendications**

**1.** Procédé comprenant :

la réception, au niveau d'un équipement utilisateur, d'une pluralité de paramètres de multiporteuse comprenant un paramètre de mise à l'échelle, une première quantité de porteuses dans un premier groupe de porteuses et une seconde quantité de porteuses dans un second groupe de porteuses, le paramètre de mise à l'échelle étant destiné à la mise à l'échelle du réglage des performances de surveillance des premier et second groupes de porteuses ;
le fonctionnement dans un premier mode en utilisant le facteur de mise à l'échelle reçu, lorsque la pluralité reçue de paramètres de multiporteuse n'a pas pour résultat que le second groupe a des performances de surveillance égales ou meilleures que celles du premier groupe ; et
le fonctionnement dans un second mode lorsque la pluralité reçue de paramètres de multiporteuse a pour résultat que le second groupe a des performances de surveillance égales ou meilleures que celles du premier groupe, le second mode comprenant une mise à l'échelle par défaut des paramètres des performances de surveillance des premier et second groupes de porteuses.

**2.** Procédé selon la revendication 1, le second groupe comprenant une ou plusieurs porteuses à surveiller avec des performances de surveillance qui sont inférieures à celles du premier groupe.

**3.** Procédé selon les revendications 1 à 2, comprenant en outre :
la détermination si la pluralité de paramètres de multiporteuse reçus a pour résultat que le second groupe a des performances de surveillance égales ou meilleures que celles du premier groupe.

**4.** Procédé selon les revendications 1 à 3, le second mode comprenant une mise à l'échelle linéaire des réglages des performances de surveillance des premier et second groupes de porteuses.

**5.** Procédé selon les revendications 1 à 4, le premier mode comprenant une mise à l'échelle des paramètres des performances de surveillance des premier et second groupes en fonction du facteur de mise à l'échelle reçu.

**6.** Procédé selon les revendications 1 à 5, les réglages des performances de surveillance comprenant au moins l'un parmi un premier temps pour détecter une porteuse ou un second temps pour mesurer la porteuse.

**7.** Appareil comprenant :

des moyens pour recevoir une pluralité de paramètres de multiporteuse comprenant un paramètre de mise à l'échelle, une première quantité de porteuses dans un premier groupe de porteuses et une seconde quantité de porteuses dans un second groupe de porteuses, le paramètre de mise à l'échelle étant destiné à la mise à l'échelle des réglages des performances de surveillance des premier et second groupes de porteuses ;
des moyens pour fonctionner dans un premier mode en utilisant le facteur de mise à l'échelle reçu, lorsque la pluralité reçue de paramètres de multiporteuse n'a pas pour résultat que le second groupe a des performances de surveillance égales ou meilleures que celles du premier groupe ; et
des moyens pour fonctionner dans un second mode lorsque la pluralité de paramètres de multiporteuse reçus a pour résultat que le second groupe a des performances de surveillance égales ou meilleures que celles du premier groupe, le second mode comprenant une mise à l'échelle par défaut des paramètres des performances de surveillance des premier et second groupes de porteuses.

**8.** Appareil selon la revendication 7, le second groupe comprenant une ou plusieurs porteuses à surveiller avec des performances de surveillance qui sont inférieures à celles du premier groupe.

9. Appareil selon les revendications 7 à 8 comprenant en outre :
un moyen pour déterminer si la pluralité de paramètres de multiporteuse reçus a pour résultat que le second groupe a des performances de surveillance égales ou meilleures que celles du premier groupe.

10. Appareil selon les revendications 7 à 9, le second mode comprenant une mise à l'échelle linéaire des réglages des performances de surveillance des premier et second groupes de porteuses.

11. Appareil selon les revendications 7 à 10, le premier mode comprenant une mise à l'échelle des réglages des performances de surveillance des premier et second groupes en fonction du facteur de mise à l'échelle reçu.

12. Appareil selon les revendications 7 à 11, les réglages des performances de surveillance comprenant au moins l'un parmi un premier temps pour détecter une porteuse ou un second temps pour mesurer la porteuse.

13. Programme informatique comprenant des instructions pour configurer un processeur afin d'amener un procédé selon au moins l'une des revendications 1 à 6 à être réalisé.

<u>100</u>

| User    <u>114</u><br>Equipment | | Network<br>Node  <u>110</u> |

Receive Multicarrier Parameters including
number of carrier in normal performance group
(Nn), number of carrier on reduced performance
group (Nr), and scaling factor (S)  <u>162</u>

Determine whether the
multicarrier parameters
will result in the reduced
performance group
having better
performance than normal
performance group
<u>164</u>

Operate using the
received multicarrier
parameters, when the
reduced performance
group will not result in
better performance than
normal performance
group    <u>166</u>

Indication that the multicarrier parameter
will result in better performance than
normal performance group    <u>168</u>

Operate using the
existing or default mode,
when the reduced
performance group will
result in better
performance than normal
performance group
<u>170</u>

# FIG. 1

FIG. 2

EP 2 988 463 B1

FIG. 3

EP 2 988 463 B1